Europäisches Patentamt

European Patent Office

Office européen des brevets

(11) Veröffentlichungsnummer: **0 229 386**

**A1**

## (12) EUROPÄISCHE PATENTANMELDUNG

(21) Anmeldenummer: **86118005.7**

(22) Anmeldetag: **23.12.86**

(51) Int. Cl.⁴: **C02F 3/20**

(30) Priorität: **07.01.86 DE 3600232**
**28.10.86 DE 3636577**

(43) Veröffentlichungstag der Anmeldung:
**22.07.87 Patentblatt 87/30**

(84) Benannte Vertragsstaaten:
**AT BE CH DE ES FR GB GR IT LI LU NL SE**

(71) Anmelder: **Jäger, Arnold**
**Gehrbergsweg 6A**
**D-3167 Burgdorf - Ramlingen(DE)**

(72) Erfinder: **Jäger, Sebastian**
**Gehrbergsweg 6**
**D-3167 Burgdorf(DE)**

(74) Vertreter: **Depmeyer, Lothar**
**Auf der Höchte 30**
**D-3008 Garbsen 1(DE)**

(54) **Wasserbelüfter.**

(57) Die Erfindung geht aus von einem beispielsweise tellerartigen Wasserbelüfter, der mit einer auf einer steifen Halterung (5) angeordneten Platte (6) aus Gummi od. dgl. ausgestattet ist, die mit einer Vielzahl feiner Schlitze versehen ist, welche zum Austritt der Luft elastisch aufweitbar sind. Um eine dauerhafte, luftdichte Verbindung zwischen der Halterung und der Platte (6) herbeizuführen, ist aufgrund der Erfindung der Rand der Platte festhaftend z.B. durch Kleben oder Vulkaniseren mit der Halterung verbunden. Um zudem ein nachteiliges Auswölben der Platte unter dem Luftdruck zu vermeiden, ist die Platte in zwischen ihren befestigten Rändern befindlichen Zonen an einer oder mehreren Stellen zusätzlich haftend befestigt.

EP 0 229 386 A1

Fig. 2

## Wasserbelüfter

Die Erfindung betrifft einen insb. ebenen Wasserbelüfter, der zur Belüftung bei Wasseraufbereitungsanlagen oder ähnlichen Zwecke benutzt werden soll. Dieser Belüfter ist nach bekannten Vorschlägen mit einer Deckplatte aus Gummi oder gummiähnlichen Stoffen versehen, die eine Vielzahl kleiner, feiner Schlitze aufweist, die sich unter dem Druck der zugeführten Luft aufweiten und so möglichst kleine Blasen an das Wasser abgeben.

Es versteht sich, dass diese Deckplatte einerseits und die darunter befindliche starre Halterung für sich hergestellt werden und eine luft-und wasserdichte Verbindung zwischen der Halterung und der Deckplatte gegeben sein muss. Nach bekannten Vorschlägen wird der Rand der Deckplatte durch Schellen od. dgl. mit der Halterung verbunden. Jedoch ist diese Art der Befestigung unzureichend, weil durch die mechanische Verbindungselemente eine dauerhafte Verbindung mit grossem Dichtheitsgrad nicht erzielbar ist.

Der Erfindung liegt im wesentlichen die Aufgabe zugrunde, die obigen Wasserbelüfter so zu verbessern, dass eine dauerhafte, sichere Verbindung zwischen der Deckplatte und der Halterung gewährleistet ist.

Zur Lösung dieser Aufgabe ist erfindungsgemäss der Rand der Deckplatte festhaftend z.B. durch Vulkanisieren oder Kleben mit der Halterung verbunden. Im allgemeinen ist es dabei ausreichend, wenn der Rand der Deckplatte mit der Oberfläche bzw. der oben liegenden Randfläche der Halterung verbunden ist. Jedoch ist es auch möglich, die die Halterung seitlich abschliessende, meist zylindrisch geformte Fläche ebenfalls zur Haftung der Deckplatte heranzuziehen, was voraussetzt, dass der Rand der Deckplatte entsprechend nach unten hin abgewinkelt werden muss.

Die von mechanischen Mitteln unabhängige Befestigung der Deckplatte sichert eine ausreichend feste Anbringung und gewährleistet, dass auch unter schwierigen Bedingungen eine dauerhafte Anbringung der Deckplatte sichergestellt ist.

Bei den eingangs erwähnten Wasserbelüftern kann sich ferner dann ein Nachteil einstellen, wenn die aktive Oberfläche der mit den feinen Schlitzen versehenen Platte vergleichsweise gross ist. Die Platte wölbt sich nach oben bogenartig aus. Bei waagerechter Anordnung des Wasserbelüfters tritt dann im Zenith des Bogens die grösste Luftmenge aus. Dieser Nachteil macht sich besonders bei geringen Durchsatzmengen bemerkbar. Der Erfindung liegt daher ferner die Aufgabe zugrunde, dafür zu sorgen, dass auch bei kleinen Luftdurchsatzmengen an den Rändern des Belüfters genügend Luft austritt, um einen besseren Wirkungsgrad erzielen zu können.

Zur Lösung dieser Aufgabe ist erfindungsgemäss die Platte aus Gummi od.dgl. in zwischen ihren befestigten Rändern befindlichen Zonen an einer oder mehreren Stellen festhaftend mit der Halterung verbunden, indem die Platte vorzugsweise stellenweise anvulkansiert wird. Vorzugsweise werden dabei streifenförmige Befestigungsstellen gewählt, obwohl auch punktartige Anbindungsstellen möglich sind.

Ein so ausgeführter Wasserbelüfter hat den grossen Vorteil, dass bei grossen aktiven Flächen der Gummiplatte auch bei kleinen Durchsatzmengen nachteilige Hochwölbungen nicht eintreten können. Daher bewirken auch kleine Durchsatzmengen gleichmässige Abführungen der Luft über die gesamte Flächenausdehnung der Wasserbelüfter hinweg.

Wird bei einem tellerartigen Wasserbelüfter ( mit im wesentlichen kreisförmiger aktiver Fläche ) die Luft zentral von unten über die Halterung zugeführt, so ist es zweckmässig, mehrere streifenförmige Befestigungsstellen vorzusehen, die sich etwa radial erstrecken sollen, und zwar vom Rand der Platte bis in die Plattenmitte, also die zentrale Zone des Wasserbelüfters, in der im Regelfalle auch keine Schlitze zum Abführen der Luft vorgesehen sind.

Bei rechteckigen oder quadratischen Wasserbelüftern können von gegenüberliegenden Rändern ausgehende streifenförmige Befestigungsstellen gewählt, und zwar in Parallelstellung in der Weise, dass in der Plattenmitte noch eine quer zu den Befestigungsstellen verlaufende streifenfreie Zone verbleibt, von der aus somit die Luft zwischen die erwähnten streifenförmigen Abschnitte gelangen kann.

Die Erfindung betrifft ferner die Herstellung der erfindungsgemässen Wasserbelüfter. Demnach ist es vorteilhaft, zunächst die Platte aus Gummi od. dgl. an den vorgesehenen Stellen haftend mit der Halterung zu verbinden und erst dann die Schlitze in der Platte anzubringen, was im Regelfalle durch Stanzen erfolgt.

Weitere Einzelheiten der Erfindung werden anhand der Zeichnung erläutert, in der vorzugsweise zur Anwendung kommende Ausführungsbeispiele dargestellt sind.

Es zeigen :

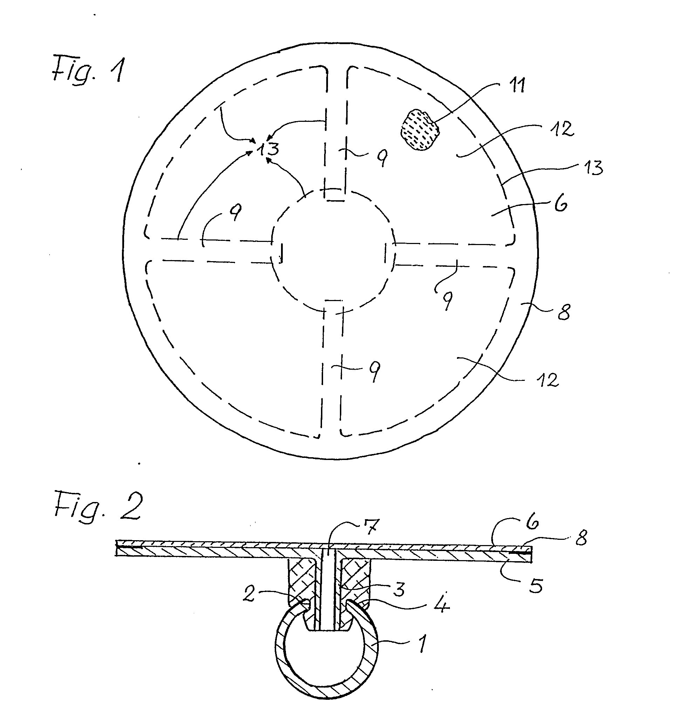

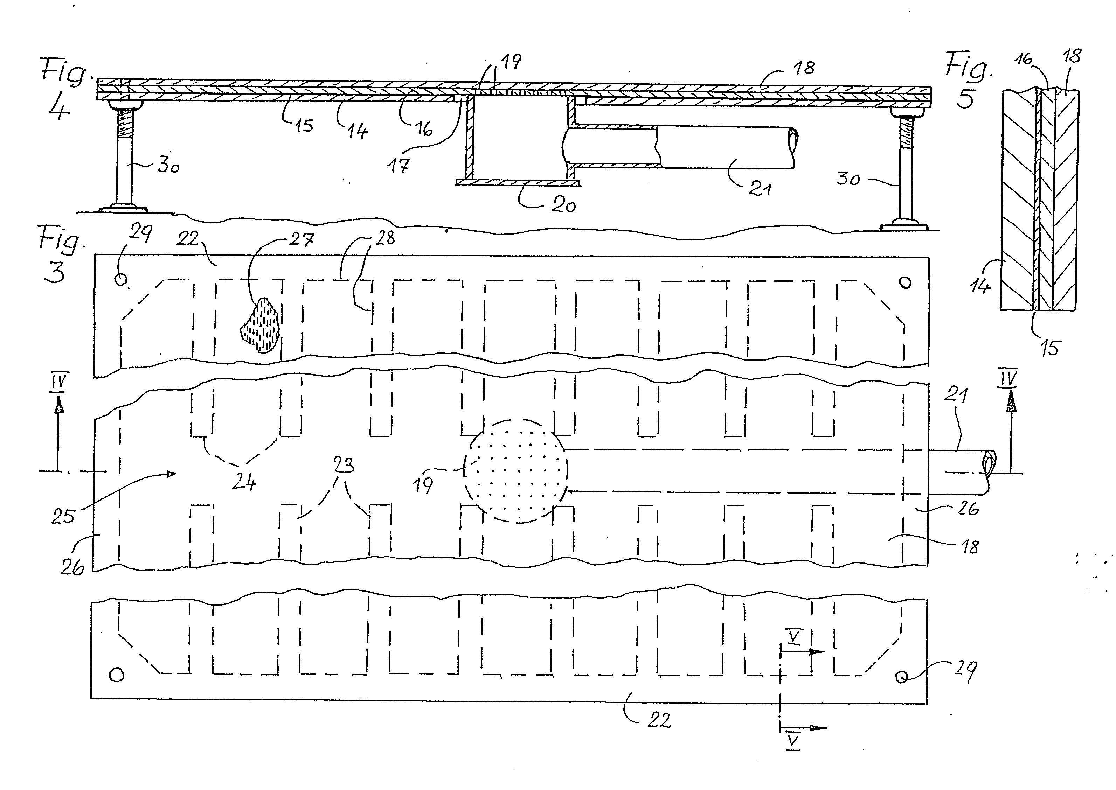

Fig. 1 einen tellerartigen Wasserbelüfter im Grundriss,

Fig. 2 einen Schnitt durch den Belüfter gemäss Fig. 1,

Fig. 3 einen abgewandelten Wasserbelüfter im Grundriss,

Fig. 4 einen Schnitt nach der Linie IV -IV von Fig. 3 und

Fig. 5 einen Teilquerschnitt durch den Belüfter gemäss Fig. 3 in vergrössertem Masstab.

Der Wasserbelüfter wird von einem Verteilerrohr 1 gespeist, das mit über seine Länge verteilt angeordneten Öffnungen 2 zum Einstecken von Stutzen 3 versehen ist. Die Stutzen 3 liegen mit einer Erweiterung 4 auf dem Verteilerrohr 1 auf, die eine flache, ebene, waagerecht angeordnete z.B. aus Polyamid bestehende Halterung 5 trägt. Die Oberfläche dieser Halterung 5 ist von einer Platte 6 aus Gummi bedeckt, die mit ihrem Rand 8 über eine Breite von etwa 1 cm festhaftend z.B. durch Vulkanisation mit der Halterung 5 verbunden ist, die im übringen mit einer Bohrung 7 versehen ist, über die die Luft unter die Platte 6 gelangen kann. Zur Erzielung einer noch besseren Befestigung kann der Rand 8 auch abgewinkelt sein und mit der umlaufenden Seitenfläche der Halterung 5 zusätzlich festhaftend verbunden werden.

Die Platte 6 ist aber nicht nur an ihrem Rand 8 über ihren Umfang hinweg, sondern zusätzlich noch über streifenförmige Befestigungsstellen 9 mit der Halterung 5 verbunden. Diese Befestigungsstellen 9 verlaufen radial und bei den dargestellten 4 Befestigungsstellen 9 ergeben sich vier Sektoren 12 zur aktiven Abführung der Luft an das Wasser.

In bekannter Weise ist die Platte 6 im Zentrum etwa bis zum Beginn der Befestigungsstellen 9 ohne Schlitze, also nicht luftdurchlässig ausgebildet, während in den Sektoren 12 feine z.B. 1 -2 mm lange Schlitze -wie bei 11 angedeutet -vorgesehen sind. Diese Schlitze öffnen sich unter dem Innendruck und geben durch elastisches Aufweiten feine Luftbläschen an das Wasser ab. Die Umrandung der erwähnten mit 12 bezeichneten Sektoren ist mit einem Linienzug 13 angedeutet.

Mit einer solchen Ausbildung des Wasserbelüfters hält sich die aufgrund des Luftinnendruckes entstehende, an sich nicht vermeidbare Auswölbung der Platte 6 nach oben in Grenzen. Es treten durch die Bildung der Sektoren 12 nur begrenzt hochwölbbare Zonen auf, die jedoch bei ihrer begrenzten Bemessung nicht zu grosse Auswölbungen verursachen können.

Es sei erwähnt, dass anstelle der vier dargestellten Befestigungsstellen 9 z.B auch fünf oder sechs Befestigungsstellen 9 treten können. Es ist jedoch nicht ratsam, bei vergleichsweise grossen Belüftungsvorrichtungen, also solchen mit grösserem Durchmesser weniger als vier Sektoren 12 zu benutzen. Auch sollen die streifenförmigen Befestigungsstellen 9 nach Möglichkeit unmittelbar in die Randbefestigung bei 7 übergehen, um sicherzustellen, dass einmal in einen Sektor 12 eingedrungene Luft nicht zum benachbarten Sektor 12 abfliessen kann.

Der in den Fig. 3 -5 dargestellte Wasserbelüfter ist für vergleichsweise grosse aktive Flächen z.B. für Belüfter geeignet, deren Kantenlänge 1 Meter beträgt. Auch hier ist eine Halterung vorgesehen, die mit 14 bezeichnet ist. Damit jedoch die Auftriebskräfte klein bleiben, ist sie aus Stahl oder einem ähnlich schweren Werkstoff gefertigt. Verzinktes Stahlblech ist hier geeignet. Unter Verwendung einer dünnen Haftmittelschicht 15 ist mit der Halterung 14 eine Deckschicht 16 aus hartem PVC verbunden, die somit über ihre gesamte Erstreckung und die gesamte Fläche der Halterung 14 mit dieser fest verbunden ist. Im Zentrum des Wasserbelüfters ist jedoch die Halterung 14 mit einer Ausnehmung 17 versehen. Die auf der Deckschicht 16 befindliche Platte aus Gummi ist mit 18 bezeichnet.

Im Bereich der Ausnehmung 17 ist die Deckschicht 16 mit mehreren Löchern 19 versehen, über die die Luft unter die Platte 18 gefördert wird.

Im Bereich der Ausnehmung 17 ist die Deckschicht 16 mit einem ebenfalls aus PVC bestehenden, unten geschlossenen Topf 20 verbunden , dem die Luft über ein Rohr 21 zugeleitet wird.

Um bei einem so grossen Wasserbelüfter eine gleichmässige Luftabführ über die Fläche der Platte 18 hinweg zu erzielen, sind mehrere Massnahmen zweckmässig.

Die Platte 18 ist an ihrem Rand etwa über eine Breite von 3 cm festhaftend mit der Deckschicht verbunden. Von gegenüberliegenden Rändern 22 des Belüfters gehen zudem senkrecht dazu verlaufende streifenförmige Befestigungsstellen 23, 24 ab, wobei fluchtende Befestigungsstellen 23, 24 in der Mitte des Belüfters im Abstand voneinander enden, um so einen Verteilerkanal 25 quer zu Befestigungsstellen 23, 24 zu schaffen, der über die Löcher 19 verläuft und sich bis an die Ränder 26 erstreckt.

An den nicht mit der Deckschicht 16 verbundenen Bereichen ist die Platte 18 mit einer grossen Anzahl kleiner durchgehender Schlitze versehen, die bei 27 angedeutet sind, in Reihen verlaufen und eine Länge von 1 -3 mm haben können. Sie müssen so beschaffen sein, dass sie sich spreizen, wenn die Luft von unten auf die Platte 18 einwirkt, und sich elastisch schliessen, wenn der Druck absinkt. Ferner sei darauf verwiesen, dass es bei manchen Anwendungen zweckmässig ist, die Platte 18 direkt oberhalb der Löcher 19 nicht mit Schlitzen zu versehen.

Die nicht angehafteten Bereiche der Platte 18 sind im übrigen durch eine gestrichelte Linie umgrenzt, die mit 28 bezeichnet ist.

Die Grösse des Wasserbelüfters macht es zudem zweckmässig, wenn er z.B. an seinen Ecken Löcher 29 erhält, mit denen höhenverstellbare Stützen an dem Belüfter angreifen können, die sich auf dem Untergrund des zu belüftenden Gewässers abstützen können. Die Verstellbarkeit dieser Stützen ermöglicht es, die Platte 18 mit ihrer Halterung 14 genau in die waagerechte Lage einzustellen. Diese Stützen sind in Fig. 4 dargestellt und mit 3o bezeichnet.

Wichtig ist ferner das erfindungsgemässe Verfahren zur Herstellung der Wasserbelüfter gemäss Fig. 3 -5. Da es sehr auf die Befestigungsstellen einerseits und die in der Platte 18 befindlichen Schlitze ankommt, werden diese erst dann eingestanzt, wenn der Schichtenverband gemäss Fig. 5 vollendet ist, also die Schichten 14, 15, 16 fest miteinander verbunden sind und zusätzlich als Abdeckkörper die Platte 18 ( stellenweise ) fest mit der Schicht 16 durch Haftung verbunden ist.

Der Wasserbelüfter gemäss Fig. 3 -5 zeigt trotz seiner grossen Ausdehnung einen gleichmässigen Austritt kleiner Luftblasen, die erwähnten Befestigungsstellen mit den angehafteten Zonen lassen unzulässig grosse Auswölbungen der Platte 18 nicht entstehen.
Der erfindungsgemässe Wasserbelüfter soll vorzugsweise zur Belüftung von Abwässern und in Wasseraufbereitungsanlagen benutzt werden. Seine Benutzung ist auch in Gewässern z.B. Seen möglich.

## Ansprüche

1. Wasserbelüfter mit einer auf einer Halterung angeordneten, dort randbefestigten Platte aus Gummi oder gummiähnlichen Stoffen, die mit einer Vielzahl feiner Schlitze versehen ist, die zum Luftaustritt elastisch aufweitbar sind, dadurch gekennzeichnet, dass der Rand der Platte (6) festhaftend z.B. durch Kleben oder Vulkanisieren mit der Halterung (5) verbunden ist.

2. Wasserbelüfter nach Anspruch 1, dadurch gekennzeichnet, dass die Platte (6) an ihrem Rand mit ihrer ebenen Unterfläche mit einem umlaufenden Randteil der Halterung (5) verbunden ist.

3. Wasserbelüfter nach Anspruch 1, dadurch gekennzeichnet, dass die Platte (6) mit einem abgewinkelten Randteil an der umlaufenden Seitenfläche der Halterung (5) angehaftet ist.

4. Wasserbelüfter nach Anspruch 1 -3, dadurch gekennzeichnet, dass die Platte (6) sowohl an ihrer ebenen ZUnterfläche als auch mit einem abgewinkelten Randteil durch Haftung befestigt ist.

5. Wasserbelüfter, insb. für eine waagerechte oder praktisch waagerechte Anordnung, nach Anspruch 1, dadurch gekennzeichnet, dass die Platte (6,18) in zwischen ihren befestigten Rändern befindlichen Zonen an einer oder mehreren Stellen - (9,23,24) festhaftend z.B. durch Ankleben oder Anvulkanisieren mit der Halterung (14,5) bzw. mit einer fest an ihr haftenden Schicht (15,16) verbunden ist.

6. Wasserbelüfter nach Anspruch 5, dadurch gekennzeichnet, dass bei etwa mittiger bzw. zentraler Zufuhr der Luft die Befestigungsstellen - (23,24) streifenförmig gestaltet sind und vorzugsweise in die Randbefestigung der Platte (6,18) übergehen.

7. Wasserbelüfter nach Anspruch 5, dadurch gekennzeichnet, dass bei runder oder etwa runder Grundrissgestalt der Platte (6) die Befestigungsstellen zumindest in etwa radial verlaufen.

8. Wasserbelüfter nach Anspruch 7, dadurch gekennzeichnet, dass bei schlitzfreier Zone oberhalb der Luftzuführung durch die Halterung (5) die Befestigungsstellen (9) etwa am Rand der - schlitzfreien Zone enden.

9. Wasserbelüfter nach Anspruch 5, dadurch gekennzeichnet, dass bei rechteckiger oder quadratischer Grundgestalt der Platte (18 oberhalb der Einströmöffnungen (19) für die Luft ein sich etwa über die Breite der Platte erstreckender Verteilerkanal (25) zwischen der Halterung und der Platte für die Luft vorgesehen ist, von dem aus quer zu diesem Kanal geschlitzte Bereiche ausgehen, die durch streifenförmige Befestigungsstellen (23,24) begrenzt sind.

1o. Wasserbelüfter nach Anspruch 9, dadurch gekennzeichnet, dass die streifenförmigen Befestigungsstellen (23,24) sich an die oder bis nahe an die Randbefestigung der Platte (18) erstrecken.

11. Wasserbelüfter nach Anspruch 5, dadurch gekennzeichnet, dass seine Halterung mit höhenverstellbaren Stützen (3o) versehen ist, die vorzugsweise im Bereich der Stellen des Wasserbelüfters angeordnet sind, an denen die Platte (18) angehaftet ist.

12. Wasserbelüfter nach Anspruch 5, dadurch gekennzeichnet, dass die Platte (18) mittelbar über eine Schicht (16) mit der Halterung fest verbunden ist, die wesentlich weicher ist als der Werkstoff für die Halterung (14) z.B. bei einer aus Stahl oder Eisen bestehenden Halterung (14) aus einem hart eingestellten, aber noch verformbaren Kunststoff - (PVC) besteht.

13. Wasserbelüfter nach Anspruch 12, dadurch gekennzeichnet, dass die Schicht (16) über eine Bindemittelschicht (15) festhaftend mit der aus Metall bestehenden Halterung (14) verbunden ist.

14. Verfahren zur Herstellung von Wasserbelüftern nach Anspruch 12, dadurch gekennzeichnet, dass zunächst alle Schichten mitsamt einer ungeschlitzten Platte auf die Halterung aufgebracht und an den vorgesehenen Stellen mit der Halterung verbunden werden, worauf die Platte zur Erzeugung der Schlitze gestanzt oder in anderer Weise zur Erzeugung der Schlitze behandelt wird.

15. Wasserbelüfter nach Anspruch 9, dadurch gekennzeichnet, dass eine Vielzahl kleiner Einströmöffnungen (19) vorgesehen ist, die von einem topfartigen Behälter (2o) ausgehen, der an eine Zuluftleitung (21) angeschlossen ist.

16. Wasserbelüfter nach Anspruch 9 und 12, dadurch gekennzeichnet, dass die Halterung (14) im Bereich der Luftzuführung ( Einströmöffnungen 19 ) ausgespart ist und die Elemente für die Luftzufuhr mit der weicheren Schicht ( PVC-Schicht ) verbunden sind, wobei diese Elemente vorzugsweise aus dem weicheren Werkstoff bestehen.

*Fig. 1*

*Fig. 2*

0 229 386

Fig. 4

Fig. 5

15

16

14

19

18

16

17

30

21

20

30

Fig. 3

29

22

27

28

25

24

23

19

26

18

26

V

V

22

29

21

26

18

0 229 386

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.4) |
|---|---|---|---|
| X | DE-A-3 316 140 (TECHTRANSFER) <br> * Patentansprüche 1,3,5,8; Seite 8, Absatz 2; Seite 13, letzte 2 Zeilen - Seite 14, erster Absatz; Seite 15, Zeilen 5-8 * | 1,2 | C 02 F 3/20 |
| | --- | | |
| X | EP-A-0 028 728 (R. MESSNER) <br><br> * Seiten 12,13; Patentansprüche 1,5 * | 1,2,5, 6 | |
| | --- | | |
| A | EP-A-0 160 193 (N. SCHNEIDER) <br> * Patentansprüche 1,7,9 * | 1,3 | |
| | --- | | |
| A | DE-B-1 784 398 (M. DANJES et al.) <br> * Spalte 4, Zeilen 12-29 * | 1,5 | |
| | ----- | | |

RECHERCHIERTE SACHGEBIETE (Int. Cl.4)

C 02 F
B 01 F
C 12 M

Der vorliegende Recherchenbericht wurde für alle Patentansprüche erstellt.

| Recherchenort | Abschlußdatum der Recherche | Prüfer |
|---|---|---|
| DEN HAAG | 10-04-1987 | TEPLY J. |